# EUROPEAN PATENT SPECIFICATION

(11) **EP 4 230 518 B1**
(45) Date of publication and mention of the grant of the patent: **02.09.2026**
(21) Application number: 22157819.8
(22) Date of filing: 21.02.2022
(51) Int. Cl.: B64C 11/00, B64C 11/46, B64C 29/00, B64D 27/24, F02C 7/045, B64D 27/31, B64D 27/34, F01D 5/14, F01D 9/04, F02K 3/06, F02K 5/00

(54) **DUCTED FAN ENGINE, ARRAY OF DUCTED FAN ENGINES, AND AIRCRAFT**
MANTELGEBLÄSEMOTOR, ANORDNUNG VON MANTELGEBLÄSEMOTOREN UND FLUGZEUG
MOTEUR À SOUFFLANTE CANALISÉE, RÉSEAU DE MOTEURS À SOUFFLANTE CANALISÉE ET AÉRONEF

(43) Date of publication of application: 23.08.2023
(73) Proprietor: Archer Aviation Inc., San Jose, CA 95134 (US)
(72) Inventor: Vermeiren, Sébastien, 80997 Munich (DE); Elsahhar, Weam, 82234 Weßling (DE); Ochoa, Xabier, 80687 München (DE); Singh, Deepesh, 82205 Gilching (DE)
(74) Representative: Finnegan Europe LLP

(56) References cited:
- EP-A1- 3 179 071
- DE-A1- 102019 115 577
- US-A1- 2019 217 937
- US-A1- 2020 290 742

## Description

### Field

The invention relates to a ducted fan engine for providing thrust to propel an aircraft and to an array comprising several ducted fan engines. Furthermore, the invention relates to an aircraft, in particular an aircraft capable of vertical take-off and landing (VTOL), comprising such a ducted fan engine or array.

### Related Art

EP 3 179 071 A1 relates to a geared gas turbine with reduced fan noise. A fan section for a gas turbine engine includes a fan rotor having fan blades, and a plurality of fan exit guide vanes positioned downstream of the fan rotor. A ratio of a number of fan exit guide vanes to a number of fan blades is between about 0.8 and about 2.5.

DE 10 2019 115 577 A1 describes an aircraft with a fuselage and at least one propulsion device providing at least one ducted fan engine.

US 2020/0290742 A1 relates to electrically driven propulsors for regional aircraft.

Aircraft capable of vertical take-off and landing (VTOL) have the potential to incorporate both the advantages of helicopters, namely starting and landing using the limited space and/or in rough terrain, as well as the advantages of conventional aircraft, such as high traveling velocities and cruising efficiently, with one another. Challenges in the design of VTOL aircraft include the necessity that, on the one hand, large propeller areas are required for the provision of a sufficient mass flow to create thrust into the vertical direction for takeoff or landing, and at the same time limit the energy consumption. On the other hand, propellers must be configured for the least amount of aerodynamic resistance for cruising, when the lift is dynamically created by means of suitable wing profiles. The reduction of energy consumption is particularly relevant in the case of electrically powered VTOL aircraft (eVTOL) such as the eVTOL aircraft described in Lilium^{®}'s patent applications US 2019/0217937 A1, US 2016/0023754 A1 or US 2016/03115221 A1.

US 2016/03115221 A1 describes an eVTOL aircraft with multiple electrically powered ducted fan engines, each of which comprise a shroud containing a stator with at least one stator vane or guiding vane and a rotor with several rotor blades.

Known VTOL aircraft using ducted fan engines, such as the Bell X-22 or the Doak VZ-4 have four or eight rotor blades, respectively, and a corresponding number of stator vanes.

Vertical take-off aircraft designed for hovering flight comprise engines that can be rotated about a pivot axis. During take-off, landing, or hovering flight, the engines are placed in a take-off/landing position in which the direction of thrust is oriented vertically. In order to accelerate the aircraft after take-off, the engines may be continuously pivoted in such a way that the direction of thrust is ultimately aligned with a cruise flight direction. The thrust provided by the engine to power the aircraft is transferred towards the fuselage through a mechanical system attaching the engine to the fuselage and allowing the engine to be pivoted in relation to the fuselage.

Passenger aircraft capable of vertical take off and landing are particularly suitable for use as an urban air taxi to provide regional mobility connecting city centers. In order to optimize operational feasibility, especially for a passenger oriented hop-on/hop-off service, it is desireable to maximize the total number of flights that an aircraft can make through a given airport within a given period of time, such as one day. Regulations such as EASA's 21J SC-VTOL (2019) effectively limit the number of permissible flights through a given airport by limiting the integrated noise emission in the given time of operation. Flight regulations additionally define certain safety requirements to be met, such as ingestion capability or resiliency against foreign object damage, for instance with regard to bird strike, hail strike, or the like.

General acceptance of urban air taxis is also expected to be dependent on low noise emission, with regard to both for passengers as well as for the public in the proximity of an urban airport and along travelling routes. Particularly quiet engines and aircraft are therefore desired.

### Description

It is an object of the invention to overcome the disadvantages of the prior art, in particular to provide a quiet and/or energy efficient engine, particularly resistant to foreign object injection, for propelling an aircraft and aircraft, particularly a VTOL, more particularly an eVTOL. This objective is solved by the subject matter of independent claim 1.

Accordingly, a ducted fan engine is configured for providing thrust for an aircraft, in particular an aircraft having vertical takeoff and landing capability, such as an eVTOL aircraft. The ducted fan engine comprises a shroud having a substantially circular cross-section. The shroud may alternatively be called duct. The shroud realizes casing in which a rotor and stator are arranged and through which an airflow may be conveyed for propelling the aircraft. The shroud of the ducted fan engine may include an aerodynamic control structure, such as a control canard, a canard structure, an aileron or landing flap.

In the ducted fan engine, the rotor imparts momentum onto the incoming air flow increasing its pressure, temperature and radial swirling, corresponding to the simultaneously generated thrust. Ducted fan engines have the inherent capability to reduce noise radiated by an aircraft to the environment by shielding noise sources through the shroud of the engine, thereby reducing emission angles.

The ducted fan engine further comprises a stator comprising one or more substantially radially extending stator vanes, and a rotor rotatably supported by the shroud. The stator may comprise a stator hub to which the stator vanes are fixed. In a particular embodiment, the stator vanes are fixed to the stator hub and/or to the stator rim such that the stator vanes are spaced equally in the circumferential direction. The stator vanes may preferably be rigidly fixed to the stator hub, in particular in a torque-proof manner. The stator hub and stator vanes may be formed integrally. The stator vanes may be formed as one with the stator hub, for example through a generative manufacturing method, such as 3D-printing. Alternatively. the stator vanes may be firmly, particularly integrally, bonded to the stator hub, such as by welding. It may be preferred that all of the stator vanes of the stator are equal in their design. The stator vanes of the stator may all have the same radial length and/or axial length. In particular, the stator vanes of the rotor may all have the same three-dimensional shape. Preferably, the radially outward tips of the stator vanes are fixed to a stator rim. The stator vanes may preferably be rigidly fixed to the stator rim, in particular in a torque-proof manner. The stator rim and stator vanes may be formed integrally. The stator vanes may be formed as one with the stator rim, for example through a generative manufacturing method, such as 3D-printing. Alternatively. the stator vanes may be firmly, particularly integrally, bonded to the stator rim, such as by welding. In a particularly preferred embodiment, the stator vanes, the stator hub and the stator rim are formed integrally.

The stator may include a shaft arranged at a radially inner region of the stator to which shaft the rotor is attached. The ducted fan engine defines a rotary axis around which the rotor rotates. It may be preferred that the shroud, the stator and the rotor share a common coaxial orientation with regard to the rotary axis. It may be preferred that the ducted fan engine comprises no more than one rotor and/or no more than one stator. The arrangement of the stator, preferably behind the rotor with regard to the forward direction of the aircraft, allows to provide one or more stator-vanes for de-swirling angular flow caused by the rotor, and to recover parallel velocity of the air conveyed through the shroud thus helping to gain more thrust and aerodynamic engine efficiency. In particular, the ducted fan engine comprises at least one stage or exactly one stage (a single stage) comprising one rotor and one stator. In the single stage, the rotor is preferably arranged upstream of the stator. The engine particularly comprises no more than three stages with a respective rotor and stator, preferably no more than two stages.

According to the invention, the rotor comprises at least 10 rotor blades and no more than 22 rotor blades. Several rotor blades may be arranged on the outside of a rotor hub in rotationally symmetrical manner and/or in equal circumferential distances to one another. The rotor may comprise a rotor hub to which the rotor blades are fixed. In a particular embodiment, the rotor blades are fixed to the rotor hub such that the rotor blades are spaced equally in the circumferential direction. The rotor blades may preferably be rigidly fixed to the rotor hub, in particular in a torque-proof manner. The rotor hub and rotor blades may be formed integrally. The rotor blades may be formed as one with the rotor hub, for example through a generative manufacturing method, such as 3D-printing. Alternatively. the rotor blades may be firmly, particularly integrally, bonded to the rotor hub, such as by welding. It may be preferred that all of the rotor blades of the rotor are equal in their design. The rotor blades of the rotor may all have the same radial length and/or axial length. In particular, the rotor blades of the rotor may all have the same three-dimensional shape. Preferably, the radially outward tips of the rotor blades are free. The radial length of the rotor blades is preferably configured complementarily to an inner diameter of the shroud in the axial range of the rotor blades. It may be preferred that the rotor is free of a rim connected to the radially outward tips of the rotor blades.

In particular, the number of rotor blades is lower than the number of stator vanes or guide vanes of the ducted fan engine. For example, the number of rotor blades may be less than half, in particular less than one third, of the number of stator vanes. Surprisingly, it was shown that fan tones or rotor tones are caused by the ducted fan engine are to a large extent caused by the interaction of incoming turbulence with the fan. The number of rotor blade is selected as such to chop off at least a large proportion of incoming turbulences thereby reducing fan tones. Airflow entering the shroud of the ducted fan engine is in many instances not uniform due to, for example, atmospheric wind instabilities. Those instabilities are ingested by the fan and interact with the leading edge of the rotor, for example whenever a rotor blade interacts with an instability or vortex. During the course of one second, an instability or vortex may cause a multitude of such interactions dependent on the RPM and the rotor blade number of the engine, causing rotor tones (audible tones generated at blade passing frequencies, short: BPF) and/or, in case of non-periodic interactions, broadband noise emitted throughout a multitude of different frequencies. A combination of rotor tones and rotor broadband noise may be referred to as rotor noise. Rotor noise travels mostly upstream. The downstream propagation of rotor noise may be reduced by the stator vanes. The noise radiated to the farfield has been shown to be vastly dominated by tones at the blade passing frequency. Such tonal noise is considered psycho-acoustically more annoying to the human ear. Therefore, more emphasis is given in aviation to limit the difference between tonal noise or rotor tones in relation to broadband noise, wherein larger differences are penalized. Surprisingly, the ratio according to the invention has proven to be particularly suitable for reducing interaction noise.

In the ducted fan engine according to the invention, the ratio of stator vanes to rotor blades is at least 15/10, in particular at least 16/10, preferably at least 17/10. The ratio is defined by the number of stator vanes divided by the rotor blade count. The blade count per rotor is an integer. The number or stator vanes per stator is an integer. The selection of an unusually high ratio of stator blades in comparison to rotor blades has surprisingly shown to significantly reduce fan tones or rotor tones, thereby rendering an aircraft using one or more ducted fan engines according to the invention significantly quieter than aircraft using other engines.

According to one embodiment of the ducted fan engine, which may be combined with the aforementioned ones, the stator comprises no more than 50 stator vanes. In particular, the stator comprises no more than 45 or 42 stator vanes, more particularly no more than 40 stator vanes. Additionally or alternatively, the stator comprises at least 20 or 24 stator vanes., in particular at least 30 stator vanes, preferably at least 32 stator vanes, more preferably at least 34 stator vanes. It may be preferred that the stator comprises exactly 36 stator vanes. Alternatively, it may be preferred that the stator comprises exactly 23 stator vanes. Less vanes could lower the aerodynamic efficiency, and as a consequence the aircraft range. More vanes would lower the aerodynamic efficiency, and increase the noise sources. Defining a minimal number of stator vanes larger than ten has been shown to improve aerodynamic efficiency of the engine. Several stator vanes may be arranged on the outside of the stator hub in a rotationally symmetrical manner and/or in equal circumferential distances to one another. Several stator vanes may protrude radially with respect to the rotor's axis of rotation outside of the stator hub. The stator vanes may essentially have a respective extension in a radial direction, wherein the stator vanes are offset from one another in a circumferential direction, in particular by an angle corresponding to the number of stator vanes. The stator vanes or guide vanes serve to realign airstream in the direction of the rotary axis of the ducted fan engine after the airstream was imposed with swirl by the rotor, thereby recovering parallel airflow velocity so as to gain more thrust and aerodynamic engine efficiency. However, the impact of the airstream coming from the rotor onto the at least one stator vane leads to periodic interaction of the rotor wakes with the leading edge of the stator vane downstream of the rotor, causing blade passing frequency tones which are also called interaction tones. Any non-periodic interaction of the stator vanes with remnants of vortices or instabilities having passed the rotor leads to further broadband noise. The interaction tones and interaction broadband noise may be referred to as interaction noise. Such interaction noise is mostly present downstream of the ducted fan engine whereas upstream propagation is reduced (shielded) by the rotor. By increasing the vane number, the number of instances in which rotor wakes strike the stator vane causing interaction noise was shown to be shifted to frequencies that are less annoying.

According to a further development, the rotor comprises at least 12 rotor blades, in particular at least 15 rotor blades. Alternatively or additionally, the rotor comprises no more than 20 rotor blades, in particular no more than 18 rotor blades. It may be preferred that the ducted fan engines rotor comprises exactly 17 rotor blades. Although increasing the number of rotor blades leads to less sound emission, the ducted fan engine's ingestion capability and/or manufacturing costs were shown to be affected detrimentally for an exceedingly large rotor blade count. Overall, fans with higher blade count perform poor against requirements regarding foreign object ingestion, such as hail strike and/or bird strike, aerodynamic efficiency, structural rigidity and/or manufacturing cost.

In a ducted fan engine according to the invention, a shroud is provided surrounding an inlet area defining an inlet length upstream of the rotor and the stator. The inlet length is at least as large as two thirds of a width, in particular an inner diameter, of the shroud at the rotor and/or stator. The width of the shroud generally refers to the extension of the shroud in the crosswise direction with respect to the axis of rotation. The inlet length is in particular no more than five times, preferably no more than 3 times, more preferably no more than twice, as large as and at least two thirds, in particular at least three quarters, of the width of the rotor and/or stator. According to a particularly preferred embodiment, the inlet length is at least as large as the shroud width at the rotor and/or stator. It may be preferred that a single-stage engine has shroud width, in particular inner diameter, defined at the stage, which is nor large than the inlet length. The width of the shroud in the inlet area may be substantially equal to the width at the engine stage. The provision of a relatively long inlet at least as large as the rotor diameter has shown to be advantageous for noise reduction in that better inlet flow conditions can be provided at many flight condition, reducing non-periodic interactions thereby helping to harvest the acoustic benefits at the above-mentioned rotor blade count and vane/blade ratio. Especially for conditions displaying a strong influence of steady distortion, such a large inlet area as shown to be useful.

A ducted fan engine according to the invention, has a shroud with a width, in particular an inner diameter, being no larger than 500 mm, in particular in a range of 200 mm to 400 mm, more particularly in a range of 270 mm to 330 mm. In a preferred embodiment, the inner diameter of a shroud may be 300 mm. It was surprisingly found out such a relatively small diameter of the engine duct, in particular in combination with a ratio of stator vanes to rotor blades of at least 15/10, in particular at least 16/10, preferably at least 17/10, may reduce noise levels significantly. Further, the small diameter is advantageous for operation of the aircraft on ground as less vortices are ingested in the inlet of the engine compared to engines with greater diameters. It has been surprisingly found out that the said ratio of rotor blades to stator vanes in combination with an engine duct with said relative small diameters is very efficient to reduce the sound emission by predominantly reduce the interaction noise or rotor tones. The inner diameter of the shroud is larger than the outer diameter of the rotor, allowing the rotor to be housed and rotate within the shroud. In order to optimize the use of the shroud surrounding the rotor, however, it may be preferred that the outer (distal) diameter of the rotor blades is at least 70%, in particular at least 80%, more particularly at least 90% or 95% of the inner diameter of the shroud. The outer diameter of the rotor blades, which may be called tip diameter, may be at least 250 mm, in particular at least 270 mm, and/or no more than 350 mm, in particular no more than 330 mm. In a particular embodiment, the tip diameter is 300 mm. Surprisingly, it was shown that ducted fan engines of a small shroud diameter are particularly suitable to maximize both engine efficiency as well as noise reduction.

According to one embodiment of the ducted fan engine, it comprises at least one electromotor configured for driving the rotor. It may be preferred that the electromotor is encased within the stator hub and/or within the rotor hub. The rotor hub may have a generally conical shape and/or be rotationally symmetrical with respect to the rotor's axis of rotation. The maximum diameter of the rotor hub may correspond to a cylindrical outside of the stator hub. The maximum diameter of the rotor hub and/or the outer diameter of a cylindrical section of the stator hub may be between 80 mm and 220 mm, in particular between 100 mm and 200 mm, preferably between 120 mm and 180 mm. In a particular embodiment, the maximum diameter of the rotor hub and/or the outer diameter of a cylindrical section of the stator hub may be between 140 mm and 160 mm, preferably 145mm. The at least one electromotor may have an output shaft directly coupled to the rotor or may be provided with a transmission coupling an output shaft of the electromotor to the rotor. Electromotors can be operated at significantly lower noise emission levels than combustion engines. The arrangement of an electromotor in the proximity of the rotor allows to minimize drag impact of the motor onto the aircraft, thus allowing for increased overall aircraft operation efficiency.

In a first embodiment of the ducted fan engine that may be combined with the above-mentioned ones the ratio of the number of stator vanes to the number of rotor blades lies between 15/10 and 19/10, in particular between 16/10 and 18/10. Surprisingly by configuring the ratio of stator vanes to rotor blades in this range, it was possible to substantially decrease noise emissions of the ducted fan engine. As the main source of noise of a ducted fan engine is considered to relate to the BPF, it was particularly surprising that a configuration of the ducted fan engine with ratio of the number of stator vanes to the number of rotor blades of no less than 15/10, in particular no less than 16/10, and no more than 19/10, in particular no more than 18/10, yielded substantially decreased sound emissions, especially fane tone or rotor tones in comparison to ducted fan engines with an inverted ratio (i.e. between 10/15 and 10/19). Noise emissions were notably lower in comparison to ducted fan engines having the inverted ratio, in some instances by margins of 5-10 dbA. Reduced noise emissions were in particular obtained in the lateral and/or rearward area of the ducted fan engine according to the invention in comparison to reference engines of different design, for example having an inverted ratio. Engine noise is measured at 2m distance from engine axis at full power condition was substantially lower for an engine according to the invention in the 90° to 180° area in comparison to reference engines (the angle indicating the angular offset from the direction of the forward facing axis of rotation). It is thought that the substantial decrease of noise emissions particularly in comparison to lower ratios or even inverted ratios might benefit from unexpected destructive interferences of sound waves within the ducted fan engine.

According to another preferred embodiment of the ducted fan engine that may be combined with other the above-mentioned ones, the ratio of the number of stator vanes to the number of rotor blades is at least 18/10, in particular at least 20/10, and/or no more than 30/10, in particular no more than 25/10. Most particularly, the ratio may lie between 20/10 and 22/10. Such ratios of number of stator vanes with respect to number of rotor blades have been shown to yield particularly desirable results with regard to sound emission and engine efficiency, allowing interaction noise to be reduced by 5 dB or even more in comparison to less suitable larger ratios.

The invention also relates to an array of several ducted fan engines rigidly coupled to one another, in particular in an axis-parallel manner. It may be preferred that two, three or five ducted fan engines are rigidly coupled to one another, in particular with their respective rotary axes parallel to one another. Using arrays of ducted fan engines such as described above allows for a distribution of sound emission sources at the aircraft, thereby reducing noise radiation. Alternatively, one ducted fan engine or a multitude of ducted fan engines may be pivotable individually, that is, independently of one another or of an array. Several ailerons or flaps, each including only one respective ducted fan engine, may be attached to the aircraft. Many conventional aircraft have large engine diameters, enabling those engines to ingest large scale distortions, resulting in corresponding noise. Distributed propulsions systems using one or more arrays on the other hand have the advantage that the individual engine diameter may be configured quite small.

Another aspect of the invention relates to an aircraft, in particular a passenger aircraft, having vertical takeoff and landing capability, in particular an electronically powered vertical takeoff and landing aircraft (eVTOL), including a fuselage and at least one ducted fan engine for array of ducted fan engines as described above. The aircraft may be equipped with at least 10 or at least 20, in particular at least 30, and/or no more than 100 or no more than 50, in particular no more than 40 ducted fan engines. A preferred aircraft may comprise 36 ducted fan engines.

The at least one ducted fan engine or at least one array of ducted fan engines is rotatably connected to the fuselage around a pitch axis of the aircraft. The aircraft in particular includes an engine pivotable in relation to the fuselage between a cruising flight position in which the thrust direction of the engine is aligned with the longitudinal axis of the aircraft, and a takeoff and landing position in which the thrust direction of the engine is angled towards the vertical axis of the aircraft. Engines being pivotably attached to the fuselage of the aircraft may be described as a thrust vectoring system. The aircraft can include at least one pivotable ducted fan engine in the rear of the aircraft, in particular in combination with an aileron or flap. Particularly, the aircraft may be provided with several, in particular exactly 2, exactly 3, or exactly 4, trailing pairs of arrays of the ducted fan engines arranged in the rear of the aircraft. Alternatively, the aircraft may be provided with a multitude of individually pivotable ducted fan engines which are arranged in the rear of the aircraft. Alternatively or additionally, the aircraft can include at least one ducted fan engine in the front of the aircraft, in particular in the manner of, instead of, or in combination with a canard. Particularly, the aircraft may be provided with one or more, in particular exactly 1, or exactly 2, leading pairs of arrays of ducted fan engines arranged in the front of the aircraft. Alternatively or additionally, the aircraft can include at least one ducted fan engine attached to a central section of the aircraft with regard to its lengthwise extension, in particular in combination with a lift body such as a wing, winglet or canard. The aircraft can include a plurality of engines arranged side-by-side in a row transversely to the direction of flow and/or in the direction of the pitch axis. By providing an aircraft with a ducted fan engine such as described above, the overall noise emission of the aircraft can be minimized.

According to a further development, the aircraft has a cruise flight state in which the at least one ducted fan engine is oriented with its rotary axis corresponding to a longitudinal axis of the aircraft at an altitude of approximately 20 m and in which noise emission determined in a lateral distance of 100m lies below 65 dBA, in particular below 62 dBA, more particularly below 60 dBA, most particularly below 55 dBA. Advantageously, the aircraft using one or more ducted fan engines as described above is inaudible from the ground when flying above 400 m.

In one embodiment of an aircraft, which may be combined with the aforementioned one, the aircraft has an approach and/or transition state in which the at least one ducted fan engine is tilted with its rotary axis oriented between the longitudinal axis and the yaw axis of the aircraft at an altitude of approximately 4 m or more and in which noise emission determined in distance of 100m lies below 73 dBA, in particular below 70 dBA, more particularly below 68 dBA, most particularly below 65 dBA or below 60 dBA. Thereby, the aircraft using one or more ducted fan engines as described above is no louder while taking off than a passing truck.

In one embodiment of an aircraft, which may be combined with the aforementioned one, the aircraft has a hovering state in which the at least one ducted fan engine is oriented with its rotary axis corresponding to a yaw axis of the aircraft at an altitude of approximately 4 m in which noise emission determined in distance of 100m lies below 70 dBA, in particular below 68 dBA, more particularly below 65 dBA, most particularly below 63 dBA or below 60 dBA.

The aircraft may include at least one primary lift body, such as a canard structure and/or a wing, which is stationarily attached to the fuselage, wherein the at least one ducted fan engine or array of ducted fan engines is attached to the primary lift body. The primary lift body may have a relatively large surface area extending in the wing span direction and the longitudinal direction of the aircraft. The primary lift body may be a statically loadbearing element for providing a lifting force during cruising flight of the aircraft in the primary cruise flight direction. It may be preferred that the primary lift body is integrally connected to the fuselage of the aircraft. In particular, the at least one ducted fan engine is arranged behind the primary lift body with regard to the cruise flight direction of the aircraft.

In particular, the aircraft is configured to be manned with at least two, preferably at least four, more preferred exactly five passengers, who may include at least one aircraft pilot. The passenger aircraft comprises a cabin for carrying one or more human passengers. In particular, the cabin for the passengers is located in the forward portion of the aircraft. The use of the ducted fan engine described herein allows to reduce or completely omit the necessity for sound absorption components which may usually surround an aircraft passenger cabin without impairing passenger comfort, rendering the aircraft lighter and thus overall more efficient. The ducted fan engine described herein may preferably be electrically powered. It may be preferred, that the ducted fan engine described herein is configured for operation and/or operated with a rotor tip velocity not exceeding Mach 1. Preferably, the ducted fan engine may be configured for operation with and/or be operated with rotor tip velocity between 0.5 Mach and 0.9 Mach, preferably 0.6 Mach and 0.8 Mach. The ducted fan engine may be configured for an operative range of 4000 RPM to 10000 RPM. Preferably, the ducted fan is configured for operation at and/or operated with approximately 9000 RPM for hover flight. Preferably, the ducted fan is configured for operation at and/or operated with approximately 4500 RPM for cruise flight.

### Brief description of the drawings/figures

Preferred configurations of the invention are described in the dependent claims. The accompanying drawings illustrate the embodiments of the present disclosure and, together with the description, further serve to explain the principles of the embodiments and to enable a person skilled in the pertinent art to make and use the embodiments.
- Fig. 1: a perspective view of an aircraft according to the invention comprising a variable lift body arranged in a tilted position;
- Fig. 2: a schematic view of the variable lift body according to Fig. 1;
- Fig. 3: a schematic front view of a ducted fan engine;
- Fig. 4: a schematic perspective view of the rotor and stator of the ducted fan engine according to Fig. 3; and
- Fig. 5: a schematic cross sectional side view of a ducted fan engine.

The exemplary embodiments of the present disclosure will be described with reference to the accompanying drawings. Elements, features and components that are identical, functionally identical and have the same effect are - insofar as is not stated otherwise - respectively provided with the same reference character.

Reference numeral 100 generally designates an aircraft provided with two sets of ducted fan engines 1 arranged into a respective array 10. The aircraft 100 comprises a fuselage 103 with wings 105 attached thereto. Each wing 105 carries a respective array 10 of ducted fan engines 1. It is conceivable that each wing 105 carries two or more respective arrays of ducted fan engines 1 and/or one or more ducted fan engine 1 mounted individually pivotable to the wing 105 and/or fuselage 103. In the illustrated embodiment, the aileron 107 with the engine 1 is rotatably attached to the fuselage 103 via the wing 105. In relation to the fuselage 103, the engine 1 is pivotable around the lateral or pitch axis Y corresponding to the direction of the wing span.

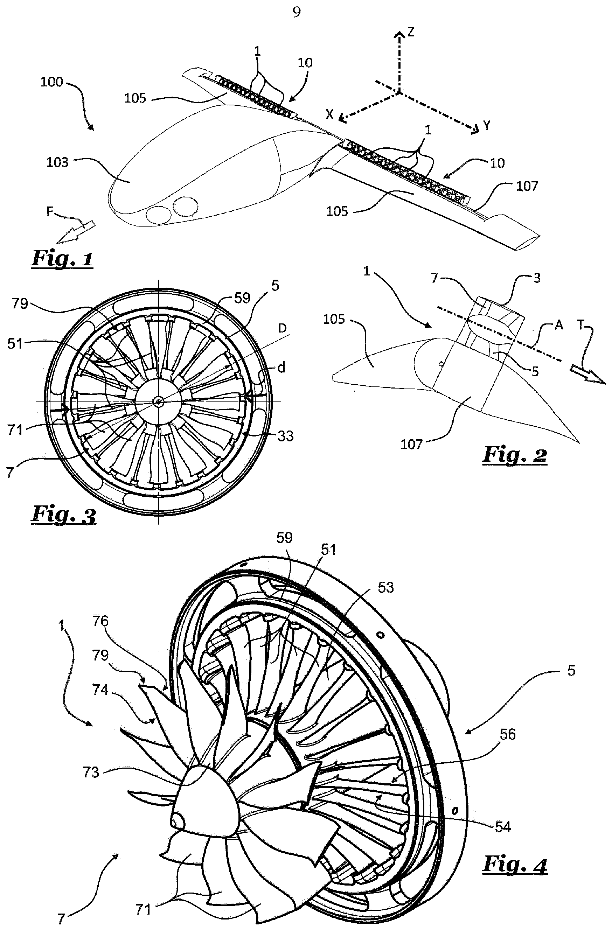

Fig. 1 shows the aircraft 100 having the array 10 arranged in a tilted position in relation to the fuselage 103. Fig. 1 shows the aileron 107 including the ducted fan engine array 10 comprising a multitude of electrically powered ducted fan engines 1 arranged in a tilted intermediate pivoting position which may correspond to a state after take-off and before cruise flight or after cruise flight and before landing, which is shown in further detail in Fig. 2. It shall be clear that the engines 1 could be in a different position, such as a cruise flight position in which the axis A of the engines is arranged corresponding, in particular essentially parallel or parallel, to the longitudinal or roll axis X (not shown). In the cruising position, the direction of thrust T of the engine 1 is aligned with the forward cruise flight direction F. The forward cruise flight direction F may correspond to the longitudinal axis or roll axis X of the aircraft 100. Alternatively, it shall be clear that the engines 1 could be arranged in yet another position, such as a vertical take-off and/or landing or hovering position in which the axis A of the engines is arranged corresponding, in particular essentially parallel or parallel, to the vertical or yaw axis Z (not shown).

Fig. 2 shows the aileron 107 with an engine 1 in a tilted intermediate pivoting position which may correspond to a state after take-off and before cruise flight or after cruise flight and before landing. The multitude of electrically powered ducted fan engines 1 are arranged immediately adjacent one another in the direction of the pitch axis Y of the aircraft 100. In the exemplary embodiment of a passenger aircraft 100 including a cabin shown in figure 1, one pair of arrays 10 of multiple individual ducted fan engines is attached to the rear of the left and right wing 105. Alternatively, several pairs of arrays 10 could be attached to the wings 105, for example two, three or four pairs of arrays 10, wherein each array may be pivotable with regard to the fuselage 103 independent of the other. At least one pair of ducted fan engines or at least pair of arrays of ducted fan engines may alternatively or additionally be attached to the front of the aircraft 100, optionally as or in combination with a canard structure (not shown).

Figure 3 shows a schematic front view onto a ducted fan engine 1. The inner diameter d defined by an inner surface 33 of the shroud 3 of the ducted fan engine 1 is indicated as a dashed line surrounding the blades 71 of the rotor 7. Several vanes 51 of a stator 5 attaching the rotor 7 to the shroud 3 are visible behind the blades 71. The outer diameter D of the rotor 7 defined by the distal ends 79 of the rotor blades 71 is almost as large as the inner diameter d of the shroud 3. In the exemplary embodiment of a ducted fan engine 1, the single rotor 7 includes 12 rotor blades, which may all be of the same design.

Figure 4 shows a schematic perspective view of the stator 5 and rotor 7 of the ducted fan engine 1. The shroud 3 is not shown in figure 4 so that the other components are clearly visible. The stator 5 shown in the exemplary embodiment comprises 23 small stator vanes 51 which may alternatively be called guiding vanes or stator blades. The stator vanes 51 extend in a generally radial direction R from a stator hub 53 towards the shroud 3. The stator hub 53 may be of generally cylindrical design and contain at least one electromotor and/or transmission for driving the rotor 7 therein.

The stator 5 is circumferentially limited by a stator rim 59. The plurality of stator vanes 51 extends in a radial direction R between the stator hub 53 and the stator rim 59. The stator vanes 51 extend from the stator hub 53 to the stator rim 59 in a spoke-like or ray-like manner. The stator vanes 51 are rigidly fixed to the stator hub 53 and to the stator rim 59, in particular such as shown herein, in an integral manner. The stator rim 59 serves as a structural connection of the stator 5 and rotor 7 to a mounting structure within the shroud 3 (not shown). By providing a large number of stator vanes 51 it is possible to save weight in comparison to fewer but larger stator vanes.

The guide vanes 51 may all be of the same design. The guide vanes 51 each define a respective airfoil 55. The guide vanes 51 are distanced equally around the rotor axis A in the circumferential direction. The airfoil 55 of each guide vane 51 may be essentially constant along the radial extension of the vane 51. The guide vane 51 may have a leading edge 54 and the trailing edge 56 both of which may be inclined with respect to the radial direction R at an angle between 20° and 45°, in particular approximately 30°, so as to minimize interaction noise. The stator vanes 51 attach the stator hub 53 and the rotor 7 rotatably mounted thereto to the shroud 3. The stator vanes 51 define an airfoil 55 with a continuous inclination γ of for example approximately 15° with regard to the rotary axis A. The inclination γ of the stator vanes 51 may preferable be essentially constant in the radial direction R along their extension from the hub 53 to the rim 59. The inclination γ of the stator vanes 51 may preferably be less than 30°, less than 20° or even less than 15°.

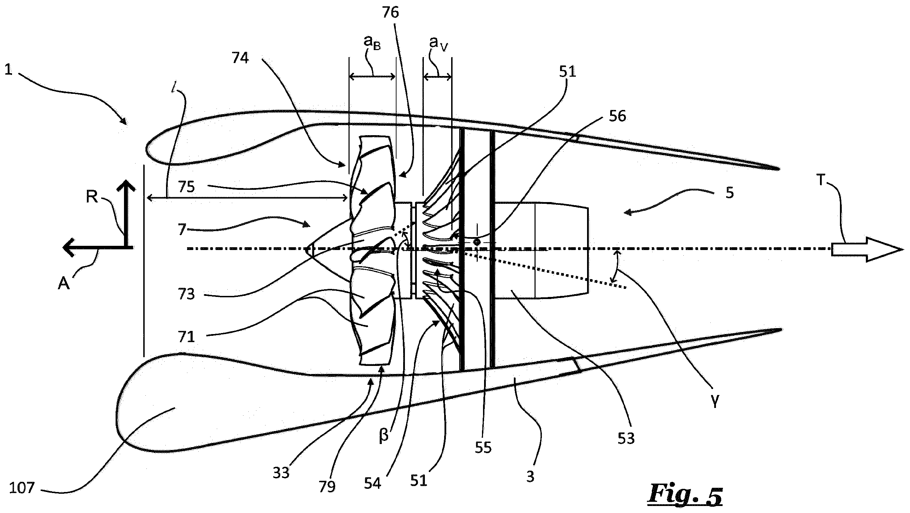

Figure 5 shows a schematic sectional side view of a ducted fan engine 1 with a shroud 3 integrally formed with an aileron 107. The ducted fan engine 1 defines a rotary axis A in regard to which the shroud 3, stator 5, and rotor 7 are arranged coaxially. With regard to an airflow streaming through the engine 1 for propelling the aircraft, the rotor 7 is arranged upstream of the stator 5. The shroud 3 defines an approximately cylindrical cross-section for the airflow. The diameter d of the shroud 3, in particular in the area of the rotor 7, may be less than 500 mm, in particular between 250 and 350 mm, for example 300 mm.

The shroud 3 surrounds an inlet area defining an inlet length 1 upstream of leading component of the rotor 7 and the stator 5 (here: the rotor 7). The inlet length 1 upstream of the leading edge 74 of the rotor 7 with respect to the direction of airflow (or thrust T) is larger than the diameter d of the shroud 3 surrounding the rotor 7. The inlet length 1 may be substantially larger than the diameter d, however, lengths as large as half or as large as two thirds of the diameter d of the shroud have shown to yield desirable characteristics.

The rotor blades 71 define an airfoil 75 with an inclination β with regard to the rotary axis A increasing from the rotor hub 73 towards the respective radially outward distal end 79 of the rotor blade. In the proximity of the rotor hub 73, the inclination β may be at a minimum and close to 0°. At the distal end 79, the inclination β may reach a maximum of for example approximately 40°. The inclination β at the distal end 79 is preferably larger than the inclination β in the proximity of the rotor hub 73. It may be preferred that the inclination β increases constantly and/or continuously from the hub 73 towards the distal end 79 of the rotor blades 71. The inclination γ of the stator vanes 51 is oriented opposite to the inclination β of the rotor blades 51 such that swirl introduced into the airflow by the rotor 7 is reduced through the stator 5. The inclination γ of the stator vanes 51 is smaller than the maximal inclination β of the rotor blades 71 and may be equal to or smaller than the mean inclination of the rotor blades 71.

The rotor blades 71 may all be of the same design. The rotor blades 71 each define a respective airfoil 75. The rotor blades 71 are distanced equally around the rotor axis A in the circumferential direction. The rotor blades 71 are rigidly attached to the rotor hub 73, for example in an integral manner. The leading edge 74 of the blade 71 may have a concave shape with regard to the axial direction A. The trailing edge 76 of the blade 71 may be essentially rectilinear. The blade 71 may be curved in the forward direction at the distal end 79. The rotor blades 71 are arranged equidistantly around the circumference of the rotor hub 73 and attached thereto such that the rotor hub 73 and the rotor blades 71 rotate together to accelerate the airflow through the ducted fan engine 1 so as to propel the aircraft. It may be preferred that the trailing edge 76 of the blade 71 and the leading edge 54 of the stator vane 51 are oriented and/or shaped different from one another.

The axial vane length a_{V} measured along the stator hub 53 is substantially smaller than the axial blade length a_{B} measured at the rotor hub 73. As shown in figure 5, axial vane length a_{V} may be approximately at least half as long as the axial blade length a_{B} and/or no longer than the axial blade length a_{B}.

The features disclosed in the above description can be combined without departing from the invention, which is defined by the appended claims.

## Claims

1. Ducted fan engine (1) configured for providing thrust for an aircraft (100) comprising:
a shroud (3) having a substantially circular cross section;
a stator (5) having one or more substantially radially extending stator vanes (51); and
a rotor (7) rotatably supported by the shroud; wherein the rotor (7) comprises at least 10 and no more than 22 rotor blades (71),
wherein the ratio of stator vanes (51) to rotor blades (71) is at least 15/10,
c h a r a c t e r i z e d in that the shroud (3) surrounds an inlet area defining an inlet length (l) upstream of the rotor (7) and the stator (5), wherein the inlet length (l) is at least as large as two thirds of a width (d) of the shroud (3) at the rotor (7) and/or stator (5).

2. Ducted fan engine according to claim 1, wherein the stator (5) comprises no more than 50 stator vanes (51), in particular no more than 42 stator vanes, more particularly no more than 40 stator vanes, and/or at least 20 stator vanes.

3. Ducted fan engine according to claim 2, wherein the stator (5) comprises exactly 36 stator vanes (51) or exactly 23 stator vanes (51).

4. Ducted fan engine (1) according to one of the preceding claims, wherein the rotor comprises at least 12 rotor blades (71), in particular at least 15 rotor blades, and/or no more than 20 rotor blades, in particular no more than 18 rotor blades (71).

5. Ducted fan engine according to claim 4, wherein the rotor (7) comprises exactly 17 rotor blades (31).

6. Ducted fan engine (1) according to one of the preceding claims, wherein the shroud (3) surrounds an inlet area defining an inlet length (l) upstream of the rotor (7) and the stator (5), wherein the inlet length (l) is at least as large as two thirds of an inner diameter of the shroud (3) at the rotor (7) and/or stator (5).

7. Ducted fan engine (1) according to one of the preceding claims, wherein the width (d) of the shroud (3) is no larger than 500 mm, in particular in a range of 200 mm to 400 mm.

8. Ducted fan engine according to claim 7, wherein the width (d) of the shroud (3) is in a range of 270 mm to 330 mm.

9. Ducted fan engine (1) according to one of the preceding claims, wherein the ducted fan engine (1) comprises at least one electromotor configured for driving the rotor (7).

10. Ducted fan engine (1) according to one of the preceding claims, wherein the ratio of stator vanes (51) to rotor blades (71) lies between 15/10 and 19/10, in particular between 16/10 and 18/10.

11. Ducted fan engine (1) according to one of the claims 1 to 9, wherein the ratio of stator vanes (51) to rotor blades (71) is at least 18/10, in particular at least 20/10, and/or no more than 30/10, in particular no more than 25/10; wherein most particularly, the ratio lies between 20/10 and 22/10.

12. Array (10) of several ducted fan engines (1) according to one of the preceding claims rigidly coupled to one another.

13. Array (10) according to claim 12, wherein the ducted fan engines are rigidly coupled to one another in an axis-parallel manner.

14. Aircraft (100) having vertical takeoff and landing capability including a fuselage (103) and at least one ducted fan engine (1) according to one of the claims 1 to 8 pivotably connected to the fuselage (103) around a pitch axis (Y) of the aircraft (100).

15. Aircraft (100) according to claim 14 having an array according to claim 12 or 13 pivotably connected to the fuselage (103) around a pitch axis (Y) of the aircraft (100).

## Patentansprüche

1. Mantelgebläsemotor (1), der dazu konfiguriert ist, Schub für ein Flugzeug (100) bereitzustellen, umfassend:
eine Verkleidung (3) mit einem im Wesentlichen kreisförmigen Querschnitt;
einen Stator (5) mit einer oder mehreren sich im Wesentlichen radial erstreckenden Statorschaufeln (51); und
einen Rotor (7), der drehbar durch die Verkleidung gestützt ist; wobei der Rotor (7) zumindest 10 und nicht mehr als 22 Rotorblätter (71) umfasst,
wobei das Verhältnis von Statorschaufeln (51) zu Rotorblättern (71) zumindest 15/10 ist,
**dadurch gekennzeichnet, dass** die Verkleidung (3) einen Einlassbereich umgibt, der eine Einlasslänge (l) stromaufwärts des Rotors (7) und des Stators (5) definiert, wobei die Einlasslänge (l) zumindest so groß wie zwei Drittel einer Breite (d) der Verkleidung (3) an dem Rotor (7) und/oder Stator (5) ist.

2. Mantelgebläsemotor nach Anspruch 1, wobei der Stator (5) nicht mehr als 50 Statorschaufeln (51), insbesondere nicht mehr als 42 Statorschaufeln, vor allem nicht mehr als 40 Statorschaufeln und/oder zumindest 20 Statorschaufeln umfasst.

3. Mantelgebläsemotor nach Anspruch 2, wobei der Stator (5) genau 36 Statorschaufeln (51) oder genau 23 Statorschaufeln (51) umfasst.

4. Mantelgebläsemotor (1) nach einem der vorhergehenden Ansprüche, wobei der Rotor zumindest 12 Rotorblätter (71), insbesondere zumindest 15 Rotorblätter und/oder nicht mehr als 20 Rotorblätter, insbesondere nicht mehr als 18 Rotorblätter (71) umfasst.

5. Mantelgebläsemotor nach Anspruch 4, wobei der Rotor (7) genau 17 Rotorblätter (31) umfasst.

6. Mantelgebläsemotor (1) nach einem der vorhergehenden Ansprüche, wobei die Verkleidung (3) einen Einlassbereich umgibt, der eine Einlasslänge (l) stromaufwärts des Rotors (7) und des Stators (5) definiert, wobei die Einlasslänge (l) zumindest so groß wie zwei Drittel eines Innendurchmessers der Verkleidung (3) an dem Rotor (7) und/oder Stator (5) ist.

7. Mantelgebläsemotor (1) nach einem der vorhergehenden Ansprüche, wobei die Breite (d) der Verkleidung (3) nicht größer als 500 mm, insbesondere in einer Spanne von 200 mm bis 400 mm ist.

8. Mantelgebläsemotor nach Anspruch 7, wobei die Breite (d) der Verkleidung (3) in einer Spanne von 270 mm bis 330 mm ist.

9. Mantelgebläsemotor (1) nach einem der vorhergehenden Ansprüche, wobei der Mantelgebläsemotor (1) zumindest einen Elektromotor umfasst, der zum Antreiben des Rotors (7) konfiguriert ist.

10. Mantelgebläsemotor (1) nach einem der vorhergehenden Ansprüche, wobei das Verhältnis von Statorschaufeln (51) zu Rotorblättern (71) zwischen 15/10 und 19/10, insbesondere zwischen 16/10 und 18/10 liegt.

11. Mantelgebläsemotor (1) nach einem der Ansprüche 1 bis 9, wobei das Verhältnis von Statorschaufeln (51) zu Rotorblättern (71) zumindest 18/10, insbesondere zumindest 20/10 und/oder nicht mehr als 30/10, insbesondere nicht mehr als 25/10 ist; wobei am meisten das Verhältnis zwischen 20/10 und 22/10 liegt.

12. Anordnung (10) von mehreren Mantelgebläsemotoren (1) nach einem der vorhergehenden Ansprüche, die starr aneinander gekoppelt sind.

13. Anordnung (10) nach Anspruch 12, wobei die Mantelgebläsemotoren auf eine achsenparallele Weise starr aneinander gekoppelt sind.

14. Flugzeug (100) mit vertikaler Start- und Landefähigkeit, das einen Rumpf (103) und zumindest einen Mantelgebläsemotor (1) nach einem der Ansprüche 1 bis 8, der schwenkbar mit dem Rumpf (103) um eine Nickachse (Y) des Flugzeugs (100) verbunden ist, beinhaltet.

15. Flugzeug (100) nach Anspruch 14 mit einer Anordnung nach Anspruch 12 oder 13, die schwenkbar mit dem Rumpf (103) um eine Nickachse (Y) des Flugzeugs (100) verbunden ist.

## Revendications

1. Moteur à soufflante canalisée (1) conçu pour fournir une poussée à un aéronef (100) comprenant :
un carénage (3) possédant une section transversale sensiblement circulaire ;
un stator (5) comportant une ou plusieurs aubes de stator s'étendant de manière sensiblement radiale (51) ; et
un rotor (7) supporté de manière rotative par le carénage ; ledit rotor (7) comprenant au moins 10 et pas plus de 22 pales de rotor (71),
ledit rapport des aubes de stator (51) aux pales de rotor (71) étant supérieur ou égal à 15/10, **caractérisé en ce que** le carénage (3) entoure une zone d'entrée définissant une longueur d'entrée (l) en amont du rotor (7) et du stator (5), ladite longueur d'entrée (l) étant au moins aussi grande que les deux tiers d'une largeur (d) du carénage (3) au niveau du rotor (7) et/ou du stator (5).

2. Moteur à soufflante canalisée selon la revendication 1, ledit stator (5) ne comprenant pas plus de 50 aubes de stator (51), en particulier pas plus de 42 aubes de stator, plus particulièrement pas plus de 40 aubes de stator, et/ou au moins 20 aubes de stator.

3. Moteur à soufflante canalisée selon la revendication 2, ledit stator (5) comprenant exactement 36 aubes de stator (51) ou exactement 23 aubes de stator (51).

4. Moteur à soufflante canalisée (1) selon l'une des revendications précédentes, ledit rotor comprenant au moins 12 pales de rotor (71), en particulier au moins 15 pales de rotor, et/ou pas plus de 20 pales de rotor, en particulier pas plus de 18 pales de rotor (71).

5. Moteur à soufflante canalisée selon la revendication 4, ledit rotor (7) comprenant exactement 17 pales de rotor (31).

6. Moteur à soufflante canalisée (1) selon l'une des revendications précédentes, ledit carénage (3) entourant une zone d'entrée définissant une longueur d'entrée (l) en amont du rotor (7) et du stator (5), ladite longueur d'entrée (l) étant au moins aussi grande que les deux tiers d'un diamètre interne du carénage (3) au niveau du rotor (7) et/ou du stator (5).

7. Moteur à soufflante canalisée (1) selon l'une des revendications précédentes, ladite largeur (d) du carénage (3) étant inférieure ou égale à 500 mm, en particulier dans une plage de 200 mm à 400 mm.

8. Moteur à soufflante canalisée selon la revendication 7, ladite largeur (d) du carénage (3) étant comprise dans une plage allant de 270 mm à 330 mm.

9. Moteur à soufflante canalisée (1) selon l'une quelconque des revendications précédentes, ledit moteur à soufflante canalisée (1) comprenant au moins un moteur électrique conçu pour entraîner le rotor (7).

10. Moteur à soufflante canalisée (1) selon l'une des revendications précédentes, ledit rapport des aubes de stator (51) aux pales de rotor (71) étant compris entre 15/10 et 19/10, en particulier entre 16/10 et 18/10.

11. Moteur à soufflante canalisée (1) selon l'une des revendications 1 à 9, ledit rapport des aubes de stator (51) aux pales de rotor (71) étant d'au moins 18/10, en particulier d'au moins 20/10, et/ou pas plus de 30/10, en particulier pas plus de 25/10 ; plus particulièrement, ledit rapport étant compris entre 20/10 et 22/10.

12. Réseau (10) de plusieurs moteurs à soufflante canalisée (1) selon l'une quelconque des revendications précédentes couplés rigidement les uns aux autres.

13. Réseau (10) selon la revendication 12, lesdits moteurs à soufflante canalisés étant couplés rigidement l'un à l'autre d'une manière parallèle à l'axe.

14. Aéronef (100) possédant une capacité de décollage et d'atterrissage vertical comprenant un fuselage (103) et au moins un moteur à soufflante canalisée (1) selon l'une des revendications 1 à 8 relié de manière pivotante au fuselage (103) autour d'un axe de tangage (Y) de l'aéronef (100).

15. Aéronef (100) selon la revendication 14 comportant un réseau selon la revendication 12 ou 13 relié de manière pivotante au fuselage (103) autour d'un axe de tangage (Y) de l'aéronef (100).
